# EUROPÄISCHE PATENTSCHRIFT

(11) **EP 0 931 445 B1**
(45) Veröffentlichungstag und Bekanntmachung des Hinweises auf die Patenterteilung: **17.07.2002**
(21) Anmeldenummer: 98122418.1
(22) Anmeldetag: 26.11.1998
(51) Int. Cl.: A01D 41/12

(54) **Fördervolumen-Messvorrichtung eines Elevators, insbes.für Erntegut**
Measuring device of the loadvolume of an elevator especially for crop
Dispositif de mesure de volume de charge d'un élévateur en particulier pour grains

(30) Priorität: 26.01.1998 DE 19802756
(43) Veröffentlichungstag der Anmeldung: 28.07.1999
(73) Patentinhaber: CLAAS Selbstfahrende Erntemaschinen GmbH, 33428 Harsewinkel (DE)
(72) Erfinder: Homburg, Helmut, 33428 Harsewinkel (DE); Kollmeier, Klaus, 48159 Münster (DE)

(56) Entgegenhaltungen:
- FR-A- 2 285 063
- GB-A- 2 088 808
- GB-A- 2 153 645
- GB-A- 2 321 112

## Beschreibung

Die Erfindung betrifft eine Meßvorrichtung für einen Fördergutdurchsatz eines Elevators, in dessen Förderschacht Förderschaufeln paternosterartig bewegt werden, die mit Fördergut, insbes. Körnerfrüchten, beladen sind und zu deren, bevorzugt ebenen, Schaufeloberflächen ein Lichstrahlenbündel einer, an dem Förderschacht quer zu diesem angeordneten, Lichtschranke im wesentlichen parallel ausgerichtet ist, aus deren Hell-Dunkelsignalzeiten ein Signalprozessor unter Berücksichtigung eines Förderschaufelabstandes und einer Förderschaufeldicke jeweils eine Fördergutkantendistanz auf der durchgelaufenen Förderschaufel bestimmt und mit dieser und einem Förderschachtquerschnitt jeweils ein Fördergutvolumen bestimmt.

Aus der DE 30 45 728 C2 ist eine derartige Vorrichtung bekannt, bei der mit einer endlos umlaufenden Förderkette durch einen rechteckigen Förderschacht etwa senkrecht zu den Schachtwänden orientierte Förderschaufeln paternosterartig gezogen werden, die mit Erntegut, insbes. Körnerfrüchten, beladen sind. Die Oberfläche der Körnerschicht auf den Schaufeln ist etwa horizontal orientiert, und der Förderschacht ist gewöhnlich in der Umlaufebene der Förderketten zur Vertikalen geneigt am Mähdrescher angeordnet. Parallel zu dessen Schaufeln ist eine zwischen den Schachtseitenwänden wirkende Lichtschranke montiert, deren Dunkelzeit jeweils bei einem Durchlauf der einzelnen beladenen Schaufeln gemessen wird, aus der unter Berücksichtigung der Abdunkelung durch die Schaufeln selbst entsprechend deren Dicke eine Beladehöhe und durch Multiplikation mit dem Schachtquerschnitt oder einer Schachtgeometriefunktion das geförderte Körnervolumen bestimmt wird. Diese Vorrichtung arbeitet nur dann relativ genau, wenn in der Normallage des Elevators der Mähdrescher auf einer Horizontalebene steht und auch die Schaufeln ausreichend gefüllt sind; bei Quer- oder Längsneigung des Elevators zur Normallage, die beim Hangfahren und bei unterschiedlicher Korntankbeladung und bei losem Untergrund auftreten, arbeitet sie jedoch mit erheblicher Ungenauigkeit, wobei in den meisten Fällen ein zu großes Kornvolumen ermittelt wird.

Weiterhin ist es aus der DE 195 44 057 A1 bekannt, die systematisch in einem geneigten Elevator mit einem Gewichtssensor zu niedrig ermittelte geförderte Getreidegewicht mittels eines Signals eines in zwei Richtungen wirkenden Neigungssensors kalkulatorisch auf die wahre geförderte Getreidemenge zu korrigieren. Diese Wägevorrichtung des Elevators und die Entkopplung des Antriebes davon ist technisch recht aufwendig.

Weiterhin ist es aus der EP 0702891 A1 bekannt, in einer Erntemaschine laufend gemessene Erträge mit Standortdaten, Geschwindigkeitssignalen und Durchlaufzeitkonstanten zu verknüpfen und so ein Erntekataster zu erstellen. Hierbei wird auf für die einzelnen Getreidearten gespeicherte oder extern vorgegebene Standard-Litergewichte bei einer Durchschnittsqualität und Durchschnittsfeuchte zurückgegriffen. Die Ernteleistung wird laufend zur Anzeige gebracht ebenso wie darauf bezogene relative Verluste.

Es ist Aufgabe der Erfindung, die eingangs genannte Vorrichtung dahingehend zu verbessern, daß sie bei einfacher Bauart eine erhöhte Genauigkeit aufweist.

Die Lösung besteht darin, daß an dem Signalprozessor weitere Meßmittel angeschlossen sind, aus deren Meßsignalen dieser jeweils eine Neigung und/oder Gestalt der Fördergutoberfläche ermittelt und entsprechend deren Richtung und Lage zum Lichtstrahlenbündel das genaue Fördergutvolumen bestimmt.

Vorteilhafte Ausgestaltungen sind in den Unteransprüchen angegeben.

Zur genauen Volumenbestimmung wird die mit der Lichtschranke vorgenommene Volumenermittlung in Bezug auf die Neigungen der Körneroberfläche zur Schaufeloberfläche in der Meßstrahlrichtung und senkrecht dazu korrigiert. Dazu werden die Neigungen mit weiteren Lichtschranken oder mit separaten Neigungssensoren oder einer Kombination aus beiden bestimmt.

Eine erste vorteilhafte Körnervolumenmeßvorrichtung ist mit drei Lichtschranken ausgestattet, von denen die eine zwischen zwei gegenüberliegenden Seiten genau mittig auf diesen angeordnet ist und die beiden anderen Lichtschranken senkrecht dazu, vorzugsweise in gleicher Höhe, und beispielsweise nahe den Schachträndern angeordnet sind. Dabei hat ein Schwenken des Schachtes aussschließlich um den ersten, mittigen Lichtschrankenstrahl keinen Einfluß auf deren Dunkelzeit- bzw. Distanzmessung, d.h. der Durchlaufzeitmessung des Schaufelbodens bis zur Körneroberfläche. Die beiden anderen Lichtschranken zeigen ein gleiches Randniveau des Körnerstandes, das jedoch je nach der Verschwenkung und abhängig von der halben Breite des Schachtes größer als die relevante Distanz, die die erste Lichtschranke mißt, ist.

Tritt jedoch eine Schwenkung des Schachtes lediglich um die anderen Lichtschrankenstrahlen auf, so ergibt sich die Neigung aus den dadurch verursachten unterschiedlichen Dunkelzeit- bzw. Distanzmeßsignalen bezogen auf den Lichtschrankenabstand. Die relevante Mittenhöhe des Körnerstandes läßt sich dann aus der maximalen Randdistanz, die die erste Lichtschranke mißt, und der genannten Neigung bezüglich der halben Schachtweite einfach ermitteln.

Ist nun der Schacht um beide Lichtschrankenachsen unterschiedlich geneigt, ergibt sich die für die Volumenbestimmung relevante Distanz der Körnerobefläche ebenso aus der von der ersten Lichtschranke gemessenen Randdistanz vermindert um die neigungsbedingte Randdistanzdifferenz bis zur Schachtmitte, die der mit den beiden anderen Lichtschranken bestimmten Neigung bezogen auf die halbe Weite des Schachtes entspricht.

Sind im vorliegenden Fall die beiden parallelen Lichtschranken, die der Neigungsbestimmung dienen, in einem Abstand montiert, der der halben Schachtweite entspricht, so ist keine zusätzliche Umrechnung erforderlich, sondern der gemessene Distanzunterschied kann direkt von der Distanz, die die erste Lichtschranke mißt, abgezogen werden, um die relevante Mittendistanz zu bekommen.

Haben die beiden parallelen Lichtschranken einen größeren Abstand voneinander als die halbe Schachtweite, ergibt sich jedoch eine größere Genauigkeit der Messungen, wobei allerdings eine zu große Nähe der Lichtschranken zu den Seitenwänden eine Genauigkeitsverringerung bringen kann, da die Körner dort durch Reibung an den Seitenwänden zurückgehalten werden und das Niveau randseitig etwas abgesenkt ist. Auch tritt dann, wenn die Kornabmessungen kleiner als der Spalt zwischen dem Paddelrand und der Seitenwand sind ein laufender Körnerverlust beim Fördern an dem Rand auf.

Aus der Signalfolge der beiden parallelen Lichtschranken wird somit ein Neigungssignal gewonnen, das auch für andere Funktionen der Erntemaschine genutzt werden kann, z.B. zum Ausgleich der Neigungseffekte beim Sieben, zum Erleichtern der Lenkung am Hang oder zur ergänzenden Steuerung der Übergabe des Erntegutes auf einen parallelfahrenden Transporter.

Weiterhin läßt sich die Neigung in der zweiten Richtung, vorzugsweise der Längsrichtung des Erntefahrzeuges aus den drei Distanzmessungen bestimmen, wenn man das Niveau der höchsten randseitigen Körnerkante, die die parallelen Lichtschranken vermessen, auf das höchste Niveau das in der Ecke auftritt, extrapoliert und von diesem Eckniveau die Differenz zum von der Einzellichtschranke an der anderen Seitenwand mittig derselben gemessenen Niveau bildet und diese Differenz in Bezug zur Schachtbreite setzt. Auch dieser aus dem höchsten Eckniveau zum Seitenmittenniveau einfach gewonnene Neigungswert läßt sich anderweitig in der Erntemaschine, z.B. zur Leistungssteuerung des Motors oder zur Geschwindigkeitsregelung, nutzen.

In analoger Weise läßt sich ein Neigungsmeßwert eines unabhängigen Neigungssensors jeweils zur Korrektur der Niveaumessung der Einzellichtschranke nutzen, wobei nur eine Korrektur notwendig ist, wenn die Einzellichtschranke mittig in der Seitenwand angeordnet ist und die Neigung um eine horizontale senkrechte Achse zur Lichtschranke gemessen wird.

Wenn die Einzellichtschranke in Richtung der Schaufelerstreckung von der Transportkette weg angeordnet ist, stört ein Durchhängen der Schaufel bei erhöhter Belastung die Meßgenauigkeit nicht, wenn die Lichtschranke mittig des Schaufelquerschnittes angeordnet ist, da der Querschnitt des Körnervolumens aus der gemessenen Mittendistanz und der Schachtbreite invariant zur Neigung der Deckfläche ebenso wie zur Neigung der Schaufelfläche bezüglich der Meßrichtung, also der Förderrichtung ist.

Die bisherigen Betrachtungen gelten bei normaler Befüllung der Schaufeln, wobei sie ganzflächig bedeckt sind. Bei geringer Befüllung ergeben sich kleine Volumina schräg geschnittener, in Förderrichtung sich erstreckender Säulen sowie Prismen und Pyramiden mit den Neigungen des Schachtes entsprechenden Kantenverläufen. Vorteilhaft ist für die Bestimmung solcher relativ kleinen Menge, daß die Lichtschranken jeweils die höchste Niveaukante detektieren. Wenn die Lichtschranken des Lichtschrankenpaares nahe an den Seitenwänden liegen, erfaßt jeweils mindestens einer der Meßstrahlen auch die kleinste Restmenge.

Die Meßgrößen, die von Restmengen herrühren, die nur von einer oder zwei Lichtschranken erfaßt werden, ermöglichen allein jedoch nur eine Volumenschätzung. Sind aber geeignete externe Neigungssignale verfügbar, so läßt sich jeweils aus dem höchsten Höhenmeßwert in Verbindung mit der Lage der betreffenden Lichtschranke und den Neigungssignalen und aus der Geometrie des Schachtes und der Schaufel das Restvolumen rechnerisch ohne weiteres genau bestimmen. Sind keine externen Neigungssignale verfügbar, so werden die vorher bei ausreichend beladenen Schaufeln ermittelten Neigungswerte zeitlich extrapoliert weiter genutzt. Nicht rechteckige Schachtquerschnitte und unebene Schaufeloberflächen sind bei den Volumenbestimmungen rechnerisch zu berücksichtigen.

Eine Überprüfung und Eichung der Lichtschrankensignale ergibt sich aus der zeitlichen Korrelation des Abstandes der aufeinanderfolgenden Schaufeln zu den Hell- und Dunkelzeiten. Die gemessene Dunkelzeit ist also stets in Relation zur Gesamtzeit einer Hell-Dunkelperiode zu setzten, und davon ist die relative Schaufeldunkelzeit abzuziehen, um den Distanzwert in Relation zum Schaufelabstand zu bekommen.

Eine Erhöhung der Meßgenauigkeit wird bei paralleler Nutzung der aus Lichtschrankensignalen erzeugten Neigungswerten und extern generierter Neigungswerten erreicht, indem jeweils einander zugehörige Werte gemittelt werden oder eine Auswahl aus diesen jeweils geeignet getroffen wird, wenn eine der Messungen gestört erscheint.

Die Genauigkeit der Vermessung der Gestalt und Lage der Getreideoberfläche ist selbstverständlich größer als deren mittelbare Bestimmung mittels der Signale von Neigungs- und Beschleunigungssensoren, da eine Schüttgutoberfläche sich jeweils im Bereich des Schüttwinkels normalerweise in ihrer Lage nicht verändert und jeweils nur bei dessen Überschreitung und bei dynamischer Erregung neu einstellt. Die ständige Reibung des Schüttgutes an den Schachtwandungen beim Fördern regt jedoch die Körner an, nach und nach eine ebene Oberfläche auszubilden, die senkrecht zum Gesamtbeschleunigungsvektor, incl. des Gravitationsvektors liegt. Es empfiehlt sich daher, mindestens vor dem Einlauf in den Meßbereich eine leicht profilierte Schachtwandung als ein Abstreiferprofil anzuordnen und/oder eine Rüttelbewegung der laufenden Schaufel, beispielsweise im Bereich des Kettenanschlusses, durch geeignete Auslenkungen der Kettenführung in die Körner einzubringen.

Wählt man den Anbringungsort der Lichtschranke im oberen Teil des Förderschachtes, damit während des Aufsteigens eine Nivellierung der Körneroberfläche weitgehend stattfindet und ein Körnerverlust an den Schaufelrändern im weiteren Verlauf praktisch nicht mehr auftritt, ist zu berücksichtigen, daß dort relativ hohe Beschleunigungen des Schachtes beim Überfahren von Bodenunebenheiten auftreten, wobei diese Beschleunigungen gewöhnlich von denen eines bodennah angeordneten Beschleunigungs- und Neigungssensors abweichen.

Eine weitere Art der Genauigkeits- und Redundanzerhöhung erbringt die Vermehrung der Anzahl der Lichtschranken und deren geeignete Verteilung auf einer Lichtschrankenebene. Durch die Auswertung mehrerer benachbarter Lichtschrankensignale läßt sich zusätzlich eine Profilierung der Oberfläche der Körner bestimmen und deren Volumen berücksichtigen oder ein geneigtes mittleres Niveau bestimmen. Die Lichtschranken in den Eckbereichen ermöglichen auch die kleineren Volumina bei nicht ganz bedeckter Schaufel ohne externe oder extrapolierte Neigungswerte exakt zu bestimmen, indem jeweils aus den Signalen der benachbarten, noch zeitweise abgedunkelten Sensoren die Niveauneigungen abgeleitet werden.

Da gewöhnlich in einem Erntemaschinencomputer Informationen über die Art und die Feuchtigkeit des Erntegutes vorliegen, wird vorteilhaft über eine Korrelationsfunktion, die beispielsweise tabellarisch gespeichert sein kann, eine Gestaltfunktion zur Korrektur des Volumens durch die Unebenheit der Oberfläche unter den jeweiligen Bedingungen genutzt.

Da die Kontur der Oberfläche durch die Erntegutkörner grob strukturiert ist und u.U. die Durchmesser von Maiskörnern, Bohnen, Erbsen etc. fast 1 cm erreichen, ist es zur Erzeugung reproduzierbarer Meßwerte zweckmäßig, bereits durch die Wahl des Durchmessers des Lichtschrankenstrahlbündels eine Mittelung der Kantenlage vorzunehmen. Das Strahlbündel sollte jeweils mehrere Körner bzw. Objekte gleichzeitig erfassen. Die Schaufel sollte jeweils, wenn sie leer ist, durch einen Rand entsprechender Höhe die Lichtschranke voll abdunkeln.

Um Einflüsse von Alterung und Verschmutzung der Lichtstrahlstrecke auf die Meßgenauigkeit möglichst klein zu halten, werden zweckmäßig jeweils das maximale Hellsignal und das minimale Dunkelsignal gespeichert und wird die Erkennungsschwelle für die Übergänge, die die jeweilige untere oder obere Kantenlage bestimmen, mittig zwischen die Extremwerte gelegt.

Die Lichtschranken können zweiteilig ausgebildet an gegenüberliegenden Schachtseiten mit ihren Sender und Empfänger angeordnet sein oder paarweise einem Reflektor auf der anderen Schachtseite gegenüber angeordnet sein, was die Montage erleichtert.

Die Erfindung wird anhand der Figuren 1 bis 6 dargestellt.
- Fig. 1: zeigt einen Längsschnitt durch einen Förderschachtabschnitt;
- Fig. 2: zeigt einen Schnitt II-II durch einen Förderschachtabschnitt;
- Fig. 3: zeigt schematisch ein um eine 1. Achse geneigtes Körnervolumen;
- Fig. 4: zeigt schematisch ein um eine 2. Achse geneigtes Körnervolumen;
- Fig. 5: zeigt schematisch ein doppelt geneigtes Körnervolumen;
- Fig. 6: zeigt ein Blockschaltbild einer Meßvorrichtung.

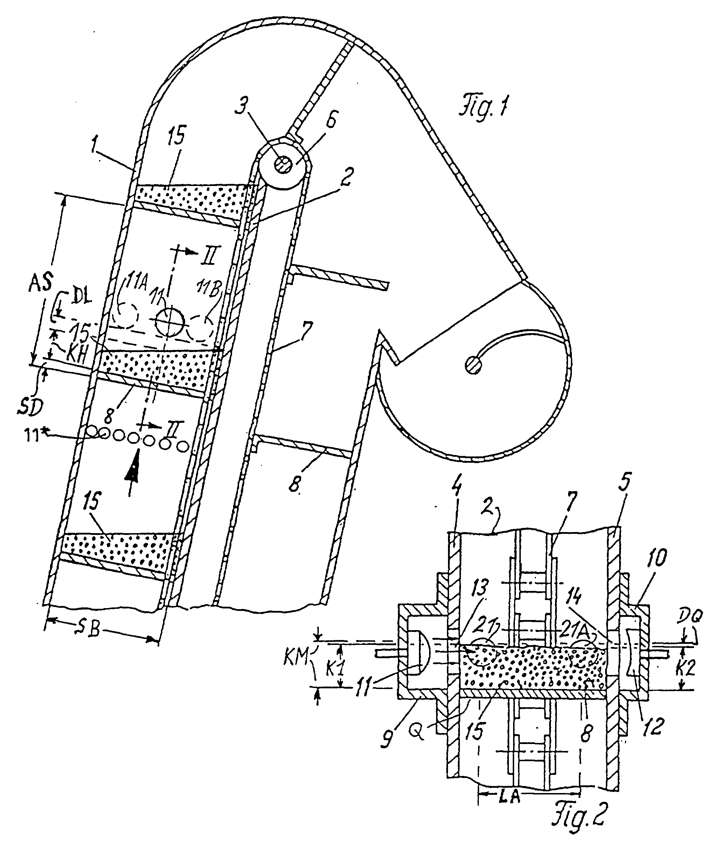

Figur 1 zeigt einen oberen Abschnitt eines seitlich geöffneten Elevators in dem Schaufeln 8 von einer Kette 7 gezogen über einen Kettenrad 6 auf einer oberen Umlenkwelle 3 umgelenkt aufsteigend bzw. ablaufend bewegt werden, wobei die Schaufeln 8 jeweils aufsteigend Erntegut 15, insbesondere in Form von Körnern, tragen und im oberen Wendebereich entladen. Die einzelnen Körnervolumina auf den Schaufeln 8 sind seitlich und außen durch einen rechteckigen Schacht 1 und innen von einer Trennwand 2 umgeben. Zwischen den beiden Seitenwänden ist eine Lichtschranke 11 angeordnet, so daß deren Strahlenbündel parallel zur vorbeilaufenden Schaufel 8 liegt. Die Lichtschranke 11 ist vorzugsweise im Querschnitt mittig zwischen der Innenwand 2 und der Außenwand 1 angeordnet.

In der gleichen Ebene des Schachtes wie die erste Lichtschranke 11 oder in der Förderrichtung etwas versetzt befinden sich weitere Lichtschranken 21, 21A zwischen der Innenwand 2 und der Außenwand 1, wobei sich deren Strahlenbündel parallel zueinander und mit dem der ersten Lichtschranke 11, in der Förderrichtung ggf. mit Versatz, kreuzend erstrecken.

Wie man leicht erkennt, ergibt sich an der einzelnen Lichtschranke 11 jeweils beim Durchlauf der Schaufeln 8 mit deren Unterkante ein beginnendes Hellsignal, so daß der zeitliche Abstand der Startflanken der Hellsignale, bei im wesentlichen konstanter Fördergeschwindigkeit, dem Maß für den Abstand AS der Schaufeln 8 entspricht, zu dem die Dunkelzeiten jeweils beim Durchlaufen der Körner 15 und der Schaufel 8 in Relation zu setzen sind, um die relative Beladehöhe KH zusammen mit der Schaufeldicke SD zu erhalten. Das gesuchte Körnervolumen ergibt sich dann, wenn die Körneroberfläche eben und parallel zum Lichtschranken-Strahlenbündel liegt, aus der Beladedistanz KH und dem Schachtquerschnitt. Eine Neigung der Schaufel zum Schacht und eine Neigung des Schachtes zur Vertikalen um das Meßstrahlenbündel herum hat keinen Effekt auf diese Volumenbestimmung.

Eine weitere Genauigkeitserhöhung bringt die Auswertung der Oberflächengestalt, indem statt einer Lichtschranke 11 eine ganze Vielfalt von Lichtschranken 11* parallel angeordnet wird. Aus den unterschiedlichen Durchlaufzeiten des Körnerbereichs und insbes. dem unterschiedlichen Dunkelzeiteinsatz ergibt sich das Oberflächenprofil, aus dessen Gestalt das Volumen im profilierten Teil bestimmt wird.

Figur 2 zeigt einen Schnitt II-II durch den Förderschacht, wodurch die Seitenwände 4 und 5 geschnitten zu sehen sind, an denen die Lichtschrankenteile 11, 12, nämlich die Infrarotlichtquelle 11 und der Photodetektor 12, angeordnet sind. Die Lichtschrankenteile sind außenseitig von einem Schutzgehäuse 9, 10 umschlossen und jeweils hinter Fenstern 13, 14 angeordnet, die die Wände 4, 5 innen glatt abschließen.

Das Strahlenbündel der Lichtschranke 11 und die Sensoraufnahmecharakteristik haben vorzugsweise jeweils einen Querschnitt, der größer als die geförderten Objekte, die Körner, ist, damit ein möglichst genaues, gemitteltes Signal zur Bestimmung des Hell-Dunkel-Überganges entsteht.

Weiterhin sind die beiden weiteren Lichtschranken 21, 21A beidseitig der Förderkette 7 gezeigt, die nahe an den Seitenwänden 4, 5, jedoch etwas beabstandet zu diesen, angeordnet sind, und deren Strahlenbündel in gleicher Ebene mit den Strahlen der ersten Lichtschranke 11 liegen. Auf diese Weise geben jeweils der Beginn der einzelnen Dunkelsignale die im Strahlenbereich höchste Beladungskantenlage K1, K2 an. Die zeitliche bzw. daraus abgeleitete räumliche Differenz DQ der Kantenlagen K1, K2 gibt jeweils bezogen auf den Lichtschrankenabstand LA ein Querneigungsmaß des Niveaus im Schacht.

Weiter gibt die Differenz DL (Fig. 1) zwischen dem Mittelwert KM der genauen Kantenlagen K1, K2 und der Kantenlage im Bereich der ersten Lichtschranke 11 bezogen auf die halbe Schachtbreite SB ein Längsneigungsmaß.

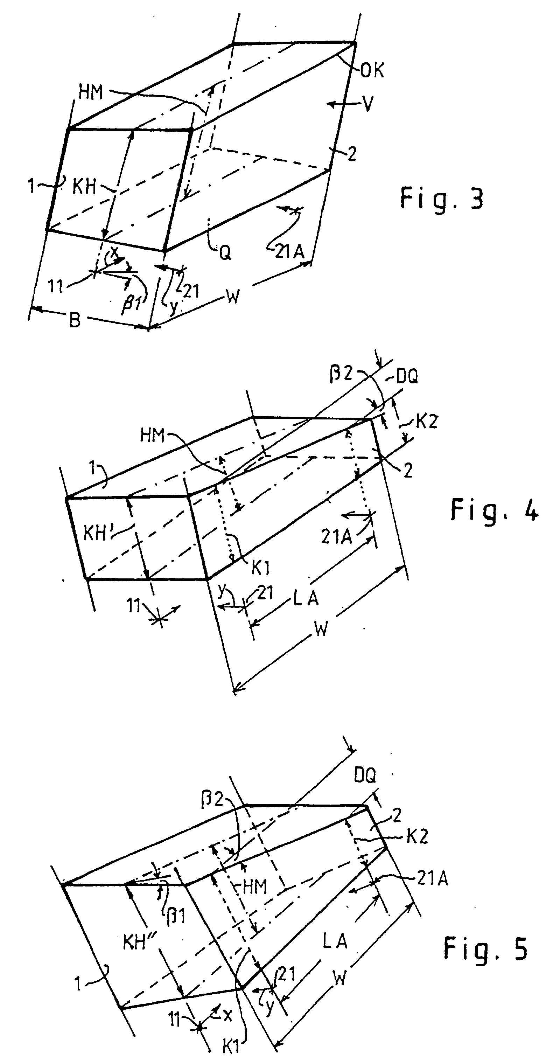

Anhand der Figuren 3 bis 5 wird die Nutzung der beiden genannten Neigungsmaße zur genauen Volumenbestimmung gezeigt. Ist die Schaufel vollständig mit Fördergut bedeckt und dessen Oberfläche im wesentlichen als eben anzusehen, so ergibt sich das jeweilige Fördergutvolumen stets aus dem Schachtquerschnitt Q multipliziert mit der Beladedistanz HM in der Mitte der Schaufel. Es kommt also primär darauf an, aus einem der Lichtschrankensignalen dort die lokale Beladedistanz zu messen und aus den relativen Anordnungen der anderen Lichtschranken dazu und aus deren Kantenlagesignalen mittels der daraus bestimmten Neigungen die Mittenbeladedistanz HM in der Schaufelmitte zu bestimmen.

Figur 3 zeigt schematisch ein Körnervolumen im Schacht mit dem rechteckigen Querschnitt Q, der Schachtbreite B und der Schachtweite W. Die Oberfläche ist eben und horizontal, und die Front- und Rückwand 1, 2 des Schachtes sind nur um die Achse X der Lichtschranken 11 um einen Winkel β1 geneigt. Das Volumen durchläuft die Lichtschranke 11 mittig der Schachtbreite, wobei sich nach Abzug der Dunkelzeit für die Schaufeldicke eine Beladedistanz KH aus der zur Periodenzeit relativierten Dunkelzeit ergibt. Die beiden Lichtschranken 21, 21A, die sich zwischen der Innen- und Außenwand erstecken, zeigen praktisch zur gleichen Zeit den Beginn der Dunkelphase an, da die Oberkante OK beide Lichtschranken gleichzeitig passiert. Dies zeigt an, daß keine Neigung um die Y-Achse des Schachtes vorliegt und die von der ersten Lichtschranke 11 gemessene Beladedistanz KH auch auf der Schaufelmitte als Mittenbeladedistanz HM vorliegt.

Figur 4 zeigt das Körnervolumen im Schacht, wenn er um die Y-Achse, zu der sich die beiden Lichtschranken 21, 21A parallel erstrecken, geneigt ist. In dem Fall sind die Kantenlagen K1, K2, die von den beiden Lichtschranken detektiert werden, verschieden und deren Lagedifferenz DQ in Bezug auf den halben Lichtschrankenabstand LA ergibt die Neigung β2. Von der durch die Einzellichtschranke 11 gemessenen maximalen seitlichen Beladedistanz KH' muß deshalb die Neigungsüberhöhung korrigiert und abgezogen werden, um zur Mittenbeladedistanz HM zu kommen. Diese ergibt sich zu HM = KH' - (DQ * W)/(LA * 2) also als Differenz der seitlichen Beladedistanz KH' und der Neigung β2 mal die halbe Weite W.

Figur 5 zeigt ein Körnervolumen bei um zwei Achsen x, y jeweils um einen Winkel β1, β2 geneigten Schacht. Aus der Lagedifferenz DQ der Kantenlagen K1, K2 an der Innen- oder Außenwand 1, 2 ergibt sich wieder bezogen auf den halben Lichtschrankenabstand LA die Neigung β2. Wie man leicht sieht, ist auch hierbei die Mittelbeladedistanz HM aus der von der Einzellichtsschranke 11 gemessenen seitlichen Beladehöhe KH'' durch Verminderung um die Neigung β2, bezogen auf die halbe Weite W, zu berechnende, so daß sich die Formel wie vor darstellt zu HM = KH'' - (DQ * W)/(LA * 2) Auch auf Fig. 3 trifft diese Formel zu, da dort das Korrekturglied Null ist.

Es ist leicht zu erkennen, daß andere Anordnungen der Lichtschranken, eine Neigung der Schaufel zum Schacht und die Fälle, in denen die Schaufel nicht voll bedeckt ist, in ähnlicher Weise leicht zur Volumenbestimmung zu betrachten sind.

Die hier gewählte Lichtschrankenanordnung hat den Vorteil der fast simultanen Oberflächenerfassung, so daß während der relativ kurzen Zeitdifferenz in denen alle drei Dunkelsignale beginnen, kaum eine Oberflächenverlagerung stattfindet.

Es ist ersichtlich, daß mit Hilfe extern gewonnener Neigungssignale β1, β2 und einem Beladedistanzmeßsignal KH'' eine Berechnung der Mittenbeladedistanz HM ebenso leicht vorzunehmen ist. Auf die Problematik der u.U. unterschiedlichen Beschleunigungen am Neigungssensor und im Meßbereich des Schachtes sowie der verzögerten Einstellung des Körnerniveaus bei Verlagerung des Beschleunigungsvektors ist jedoch zu achten und u.U eine Korrektur diesbezüglich vorzunehmen.

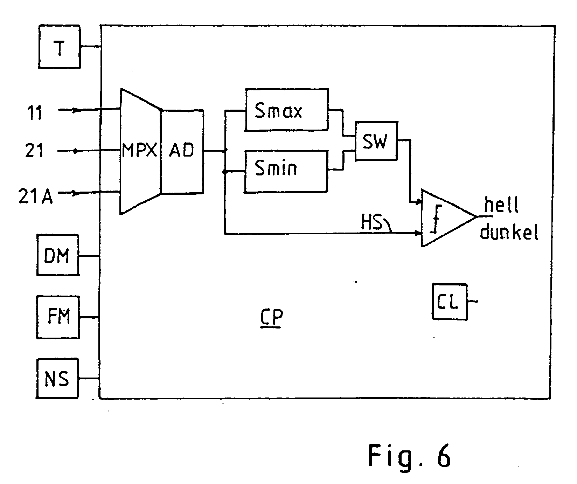

Figur 6 zeigt ein Blockschaltbild der Vorrichtung, die aus einem programmierten Prozessor CP besteht, dem eingangsseitig die Signale der Lichtschrankenempfänger 21, 21A, 11 zugeführt sind und der außerdem je nach den Anforderungen mit zu dem jeweilig geförderten Produkt zugehörigen Daten, wie Wichte, Feuchtigkeitsgehalt, Getreideart, versorgt wird. Dies kann über eine Datenleitung, eine Kommunikationsvorrichtung, eine Tastatur oder mittels Meßsensoren, insbes. mit einem Dichtemesser DM und einem Feuchtigkeitsmesser FM in bekannter Weise geschehen.

Die eingegebenen Lichtschrankensignale werden bezüglich der Dauer ihrer Hell- und Dunkelphasen und/oder deren relativen Zeitlage und Dauer zueinander mittels der Taktsignale eines Taktgebers CL ausgewertet und, wie angegeben, mit den eingespeicherten geometrischen Daten des Schachtes und den Dichte- und Feuchtemeßwerten in Mengenstromwerte und Gesamtmengendaten über eine längere Förderzeit umgerechnet und laufend zur weiteren Ermittlung von Flächenertragswerten und deren Kartierung, bereitgestellt oder ausgegeben und ggf. einem Bediener zur Anzeige gebracht.

Sind weniger als die drei gezeigten Lichtschranken vorhanden, so ist mindestens ein Beschleunigungs/Neigungssensor NS eingangsseitig angeschlossen, dessen Signal in der beschriebenen Weise zur Korrektur der jeweiligen Getreidedistanzmessung bzw. Volumenberechnung genutzt wird. Hierbei tritt das Problem der Schüttwinkeltoleranz auf, die eine Ungenauigkeit und Verfälschung der Volumenwerte mit sich bringt. Diese wird vorteilhaft mittels Korrekturwerten weitgehend vermindert, die meßtechnisch oder empirisch gewonnen, tabellarisch oder funktional abhängig von der Getreideart und deren relativen Feuchtigkeit gespeichert bereitgestelltsind.

Wird eine Vorrichtung, wie dargestellt, sowohl mit mindestes drei Lichtschranken 11, 21, 21A und außerdem mit mindestens einem Neigungssensor NS, der die Neigung in der Lichtschrankenrichtung ermittelt, versehen, so lassen sich durch einen Vergleich der Ergebnisse der Volumenbestimmung mittels der Signale mehrerer Lichtschranken 11, 21, 21A und der Volumenbestimmung mittels der Signale einer Lichtschranke 11 und des Neigungssensors NS die Korrekturwerte bei den verschiedenen Verhältnissen, insbes. auch jeweils nach einer Änderung der Neigung, deren Größe zugeordnet erfassen. Diese Korrekturwerte werden dann tabellarisch oder funktional nutzbar für vereinfachte Vorrichtungen mit wenigen Lichtschranken und einem Neigungssensor NS bereitgestellt und dort genutzt.

Die Lichtschrankensignale werden unmittelbar in analoger Form einem Analog-Digitalwandler AD zugeführt und dort digitalisiert, wobei mehrere Signale über einen Multiplexer MPX periodisch nacheinander jeweils abgefragt werden. Um möglichst große Genauigkeiten der Zeitbestimmungen der durchlaufenden Schaufelkanten und der Körnergrenzen zu gewährleisten, werden von den einzelnen Lichtschranken jeweils die maximalen und die minimalen Lichtsignalwerte laufend ermittelt und mittig dazwischen jeweils ein Schwellwert für die einzelnen Lichtschranke bestimmt, bei dessen Durchlaufen der Übergang des Lichtschrankensignals von dunkel nach hell bzw. umgekehrt bestimmt ist und jeweils der zugehörige Zeitpunkt erfaßt wird. Selbstverständlich kann die Schwellwerterzeugung und der Schwellwertvergleich auch im analogen Bereich erfolgen und das jeweils am Vergleicher entstehende Digitalsignal einem Digitaleingang der Auswertevorrichtung zugeführt werden. Die Signalverarbeitung ist schematisch für eines der Signale dargestellt. Dabei sind der jeweils letzte Maximalwert mit Smax gekennzeichnet und der jeweils letzte Minimalwert mit Smin und der daraus gemittelte Schwellwert mit SW, der mit dem Helligkeits-Signalwert HS in kurzen Abständen verglichen wird, wobei sich der Zustand hell bzw. dunkel aus dem Vergleich ergibt.

Alternativ oder zusätzlich zu der mittigen Einzel-Lichtschranke 11 können auch zwei parallele Lichtschranken 11A, 11B, wie in Fig. 1 angedeutet vorgesehen sein. Deren Signale lassen sich durch Mittelung wie das Signal einer Einzellichtschranke verwenden. Außerdem läßt sich vorteilhaft der Verlauf der Unterkante der Schaufel vermessen und so deren Neigung bestimmen, wenn man das kleine Volumen auf einer nicht voll belegten Schaufel bestimmen will. Ist die Lichtschrankenanordnung mit zwei Lichtschrankenpaaren 11A, 11B; 21, 21A ausgebildet, so ergibt die Redundanz der vier Distanzsignale vorteilhaft eine Möglichkeit zu einer doppelten Volumenbestimmung und einer Mittelung daraus.

## Patentansprüche

1. Meßvorrichtung für einen Fördergutdurchsatz eines Elevators in dessen Förderschacht Förderschaufeln (8) paternosterartig bewegt werden, die mit Fördergut (15), insbesondere Körnerfrüchten, beladen sind und zu deren Schaufeloberflächen ein Lichstrahlenbündel einer, an dem Förderschacht quer zu diesem angeordneten, Lichtschranke (11) im wesentlichen parallel ausgerichtet ist, aus deren Hell-Dunkelsignalzeiten ein Signalprozessor (CP) unter Berücksichtigung eines Förderschaufelabstandes (AS) und einer Förderschaufeldicke (SD) jeweils eine Fördergutkantendistanz (KH) auf der durchgelaufenen Förderschaufel (8) bestimmt und mit dieser und einem Förderschachtquerschnitt (Q) jeweils ein Fördergutvolumen bestimmt,
**dadurch gekennzeichnet, daß** an dem Signalprozessor (CP) weitere Meßmittel (21, 21A, NS) angeschlossen sind, aus deren Meßsignalen dieser jeweils eine Neigung und/oder Gestalt der Fördergutoberfläche ermittelt und entsprechend deren Richtung und Lage zum Lichtstrahlenbündel das genaue Fördergutvolumen (V) bestimmt.

2. Meßvorrichtung nach Anspruch 1, **dadurch gekennzeichnet, daß** als die weiteren Meßmittel (21, 21A) ein Lichtschrankenpaar (21, 21A) parallel zueinander und senkrecht zur ersten Lichtschranke (11) quer zum Förderschacht angeordnet sind, aus deren Meßsignalen aus dem jeweiligen zeitlichen Abstand von deren Hell-Dunkelübergängen bezogen auf deren Lichtschrankenabstand (LA) die Neigung der Fördergutoberfläche in dieser Richtung bestimmt wird und aus dieser proportional zur halben Schachtweite (W) eine Korrekturgröße, mit der eine Mittenfördergutdistanz (HM) aus der Fördergutkantendistanz (KH), die mittels der anderen Lichtschranke (11) bestimmt worden ist, gebildet wird.

3. Meßvorrichtung nach Anspruch 2, **dadurch gekennzeichnet, daß** die Lichtschranken (21, 21A) des Lichtschrankenpaares jeweils nahe einer dazu parallelen Seitenwand (4, 5) angeordnet sind.

4. Meßvorrichtung nach Anspruch 1, **dadurch gekennzeichnet, daß** eines der weiteren Meßmittel (NS) mindestens ein Beschleunigungs- und/oder Neigungssensor (NS) ist.

5. Meßvorrichtung nach einem der vorstehenden Ansprüche, **dadurch gekennzeichnet, daß** die Lichtschranke (11), die der Bestimmung der Fördergutkantenhöhe (KH) dient, mittig zum Schachtquerschnitt und zwischen solchen Schachtseiten (4, 5), zu denen die Förderschaufeln (8) unabhängig von dem jeweiligen Fördergutdurchsatz senkrecht stehen, angeordnet ist.

6. Meßvorrichtung nach einem der vorstehenden Ansprüche, **dadurch gekennzeichnet, daß** mehrere, insbes. zwei parallele Lichtschranken (11A, 11B) der Bestimmung der Fördergutkantenhöhe (KH) mittig zum Querschnitt bezogen auf die Schachtseiten (1, 2), nahe denen sie angeordnet sind, durch eine lagebezogene Mittelung der jeweiligen einzelnen Kantenhöhen in den Lichtschrankenbereichen dienen.

7. Meßvorrichtung nach einem der vorstehenden Ansprüche, **dadurch gekennzeichnet, daß** die mittels der parallelen Lichtschranken (21, 21A; 11, 11A, 11B) die Neigung(en) (β1, β2) der Förderschaufeln (8) und/oder der Fördergutkantendistanze(n) (K1, K2; KH) bestimmt werden, die der Bestimmung des Fördergutvolumens (V) dienen und ggf. ausgegeben werden.

8. Meßvorrichtung nach einem der vorstehenden Ansprüche, **dadurch gekennzeichnet, daß** jeweils zwei der parallelen Lichtschranken (21, 21A; 11A, 11B) nahe der jeweils ihr parallel benachbarten Seitenwand (4, 5; 1, 2) angeordnet sind.

9. Meßvorrichtung nach einem der vorstehenden Ansprüche, **dadurch gekennzeichnet, daß** das Lichtstrahlenbündel der Lichtschranke(n) (11, 11A, 11B; 21, 21A) einen Durchmesser aufweisen der größer als der Querschnitt des größten zu fördernden Fördergutelementes ist.

10. Meßvorrichtung nach einem der vorstehenden Ansprüche, **dadurch gekennzeichnet, daß** der laufend bestimmte Helligkeitswert (HS) eines Lichtschrankensignals jeweils zur Bestimmung der Zeitpunkte des Hell-dunkelüberganges und des Dunkel-hellüberganges mit einem Mittelwert aus einem zuvor gespeicherten maximalen Helligkeitswert (Smax) und einem minimalen Helligkeitswert (Smin) verglichen wird und dabei jeweils ein Über- und ein Unterschreiten des Mittelwertes (SW) zur Bestimmung der Übergangszeitpunkte genutzt werden.

11. Meßvorrichtung nach einem der vorstehenden Ansprüche, **dadurch gekennzeichnet, daß** die Fördergutkantendistanz (KH) in Verbindung mit der Neigung (β1, β2) und ggf. einer Förderschaufelneigung und der Schachtgeometrie darauf geprüft wird, ob die Förderschaufel (8) vollständig mit dem Fördergut (15) bedeckt ist, und wenn dies nicht so ist, das Fördergutvolumen durch Berechnung von entsprechenden Pyramiden- und Prismenvolumina aus diesen zusammengesetzt bestimmt wird oder bei dazu unzureichender Meßinformation extrapoliert geschätzt wird.

12. Meßvorrichtung nach einem der vorstehenden Ansprüche, **dadurch gekennzeichnet, daß** zur Minimierung eines Schüttwinkeltoleranzfehlers jeweils abhängig von einem Getreideartindex Beschleunigungs- und/oder Feuchtigkeitsgehaltwerten jeweils infolge einer Neigungsänderung eine Oberflächengestalt-Korrekturgröße bestimmt wird, um die das jeweils roh berechnete Fördergutvolumen (V) korrigiert wird.

13. Meßvorrichtung nach einem der vorstehenden Ansprüche, **dadurch gekennzeichnet, daß** zur Verringerung des Schüttwinkeltoleranzfehlers die Förderschaufeln (8) jeweils nahe dem Einlaufbereich in die Lichtschranke(n) (11, 21, 21A) einer Rüttelführung ausgesetzt sind und/oder die Schachtwände (1, 2, 4, 5) das Fördergut (15) hemmend ausgebildet sind.

14. Meßvorrichtung nach Anspruch 1, **dadurch gekennzeichnet, daß** mindestens in einer Richtung eine Vielzahl von parallelen Lichtschranken (11*) angeordnet sind, aus deren relativer Dunkelsignaldauer jeweils ein Oberflächenprofilverlauf ermittelt wird, der bei der Volumenbestimmung berücksichtigt wird.

15. Meßvorrichtung nach einem der vorstehenden Ansprüche, **dadurch gekennzeichnet, daß** die Lichtsender und die Lichtempfänger der Lichtschranken (11, 21, 21A, 11*) jeweils an verschiedenen Schachtwänden (1, 2; 4, 5) einander gegenüberliegend angeordnet sind oder einander benachbart auf einem Reflektor auf der gegenüberliegenden Seite gerichtet angeordnet sind.

## Claims

1. A measuring apparatus for a through-put of material being conveyed in an elevator, in the conveyor shaft of which conveyor vanes (8) are moved in a paternoster-like movement, which conveyor vanes are loaded with material (15) being conveyed, in particular grain crops, and in relation to the vane surfaces of which a light beam of a light barrier arrangement (11) arranged at the conveyor shaft transversely with respect thereto is oriented substantially parallel, from the light-dark signal times of which a signal processor (CP), having regard to a conveyor vane spacing (AS) and a conveyor vane thickness (SD), determines a respective edge distance (AH) of the material being conveyed on the conveyor vane (8) which has passed through, and determines with same and a conveyor shaft cross-section (Q) a respective volume of material being conveyed, **characterised in that** connected to the signal processor (CP) are further measuring means (21, 21A, NS), from the measurement signals of which it respectively ascertains an inclination and/or configuration of the surface of the material being conveyed and in accordance with the direction thereof and position thereof relative to the light beam determines the precise volume (V) of material being conveyed.

2. A measuring apparatus according to claim 1 **characterised in that** as the further measuring means (21, 21A) a pair of light barrier arrangements (21, 21A) are arranged in mutually parallel relationship and perpendicularly to the first light barrier arrangement (11) transversely with respect to the conveyor shaft, from the measurement signals of which, from the respective spacing in respect of time of the light-dark transitions thereof, in relation to the light barrier arrangement spacing (LA) thereof, the inclination of the surface of the material being conveyed is determined in said direction and from same in proportion to half the shaft width (W) a correction value with which a centre-to-centre distance (HM) of the material being conveyed is formed from the edge distance (KH) of said material, which has been determined by means of the other light barrier arrangement (11).

3. A measuring apparatus according to claim 2 **characterised in that** the light barrier arrangements (21, 21A) of the pair are each arranged close to a side wall (4, 5) parallel thereto.

4. A measuring apparatus according to claim 1 **characterised in that** one of the further measuring means (NS) is at least one acceleration and/or inclination sensor (NS).

5. A measuring apparatus according to one of the preceding claims **characterised in that** the light barrier arrangement (11) which serves to determine the edge height (KH) of the material being conveyed is arranged centrally in relation to the shaft cross-section and between such shaft sides (4, 5) in relation to which the conveyor vanes (8) are disposed perpendicularly independently of the respective through-put of material being conveyed.

6. A measuring apparatus according to one of the preceding claims **characterised in that** a plurality of and in particular two parallel light barrier arrangements (11A, 11B) serve to determine the edge height (KH) of the material being conveyed centrally with respect to the cross-section in relation to the shaft sides (1, 2) near to which they are arranged, by position-related averaging of the respective individual edge heights in the light barrier arrangement regions.

7. A measuring apparatus according to one of the preceding claims **characterised in that** by means of the parallel light barrier arrangements (21, 21A; 11, 11A, 11B) the inclination(s) (β1, β2) of the conveyor vanes (8) and/or the edge distance(s) (K1, K2; KH) of the material being conveyed are determined, which serve to determine the volume (V) of the material being conveyed and are possibly outputted.

8. A measuring apparatus according to one of the preceding claims **characterised in that** two of the parallel light barrier arrangements (21, 21A; 11A, 11B) are arranged in each case near to the side wall (4, 5; 1, 2) which is respectively adjacent thereto in parallel relationship.

9. A measuring apparatus according to one of the preceding claims **characterised in that** the light beam of the light barrier arrangement or arrangements (11, 11A, 11B; 21, 21A) is of a diameter which is larger than the cross-section of the largest element of material to be conveyed.

10. A measuring apparatus according to one of the preceding claims **characterised in that** the continuously determined brightness value (HS) of a light barrier arrangement signal, for determining the moments in time of the light-dark transition and the dark-light transition, is respectively compared to a mean value from a previously stored maximum brightness value (Smax) and a minimum brightness value (Smin) and **in that** case a value above and a value below the mean value (SW) are respectively used to determine the moments in time of the respective transition.

11. A measuring apparatus according to one of the preceding claims **characterised in that** the edge distance (KH) of the material being conveyed in conjunction with the inclination (β1, β2) and possibly a conveyor vane inclination and the shaft geometry are checked to ascertain whether the conveyor vane (8) is completely covered with the material (15) being conveyed and, if that is not so, the volume of material being conveyed is determined by calculation of corresponding pyramid and prism volumes as being composed thereof or is estimated by extrapolation in the event of measurement information which is insufficient for that purpose.

12. A measuring apparatus according to one of the preceding claims **characterised in that** to minimise a repose angle tolerance error in each case in dependence on an index relating to the kind of grain, acceleration and/or moisture content values in each case as a result of a variation in inclination a surface configuration correction value is determined, by which the respective roughly calculated volume (V) of material being delivered is corrected.

13. A measuring apparatus according to one of the preceding claims **characterised in that** to reduce the repose angle tolerance error the conveyor vanes (8), near the region of entry into the light barrier arrangement or arrangements (11, 21, 21A), are subjected to a vibrating guidance effect and/or the shaft walls (1, 2, 4, 5) are adapted to restrict the material (15) being conveyed.

14. A measuring apparatus according to claim 1 **characterised in that** arranged at least in one direction are a plurality of parallel light barrier arrangements (11*), from the relative dark signal duration of which is respectively ascertained a surface profile configuration which is taken into account in determining the volume.

15. A measuring apparatus according to one of the preceding claims **characterised in that** the light transmitters and the light receivers of the light barrier arrangements (11, 21, 21A, 11*) are respectively arranged in mutually opposite relationship at different shaft walls (1, 2; 4, 5) or are arranged in mutually adjacent relationship directed on a reflector on the opposite side.

## Revendications

1. Dispositif de mesure du débit de produit dans un élévateur, avec un puits dans lequel des pales transporteuses (8) chargées de produit à transporter (15), en particulier de grains, se déplacent à la manière d'un paternoster, avec un faisceau de rayons lumineux d'un barrage photo-électrique (11) disposé dans le puits, transversalement à ce dernier, qui est dirigé essentiellement parallèlement à la surface des pales et sur la base des périodes de signal claires-sombres duquel un processeur de signal (CP) détermine, en tenant compte d'une distance entre pales transporteuses (AS) et d'une épaisseur de pale transporteuse (SD), une distance (KH) du bord du produit transporté par rapport à la pale (8) qui précède et, sur la base de celle-ci et d'une section de puits (Q), calcule un volume de produit transporté, **caractérisé en ce qu'**au processeur de signal (CP) sont connectés des moyens de mesure (21, 21A, NS) supplémentaires, à partir des signaux desquels on détermine une pente et/ou une conformation de la surface du produit transporté et, en fonction de la direction et de la position de celle-ci par rapport au faisceau de rayons lumineux, on calcule le volume exact (V) de produit transporté.

2. Dispositif de mesure selon la revendication 1, **caractérisé en ce que** comme moyens de mesure (21, 21A) supplémentaires, deux barrages photo-électriques (21, 21A) sont disposés parallèlement l'un à l'autre et perpendiculairement au premier barrage photoélectrique (11), transversalement au puits de transport, **en ce qu'**à partir des signaux de mesure desdits barrages, sur la base de l'écart temporel entre les passages clairs-sombres rapporté à la distance des barrages photo-électriques (LA), on calcule la pente de la surface du produit transporté dans cette direction, on définit à partir de celle-ci, proportionnellement à la moitié de la section du puits de transport, une grandeur de correction avec laquelle on détermine une distance moyenne de produit transporté (HM) à partir de la distance du bord du produit transporté (KH) déterminée à l'aide de l'autre barrage photo-électrique (11).

3. Dispositif de mesure selon la revendication 2, **caractérisé en ce que** les barrages photo-électriques (21, 21A) de la paire de barrages photo-électriques sont disposés chaque fois à proximité d'une paroi latérale (4, 5) parallèle.

4. Dispositif de mesure selon la revendication 1, **caractérisé en ce que** l'un des moyens de mesure supplémentaires (NS) est au moins un capteur d'accélération et/ou d'inclinaison (NS).

5. Dispositif de mesure selon une des revendications précédentes, **caractérisé en ce que** le barrage photo-électrique (11) qui sert à déterminer la hauteur du bord de produit transporté (KH) est disposé au centre par rapport à la section du puits, et entre les côtés (4, 5) du puits par rapport auxquels les pales transporteuses (8) sont perpendiculaires indépendamment du débit de produit transporté.

6. Dispositif de mesure selon une des revendications précédentes, **caractérisé en ce que** plusieurs, en particulier deux barrages photo-électriques (11A, 11B) parallèles servent à déterminer la hauteur du bord de produit transporté (KH) au milieu de la section, par rapport aux côtés de puits (1, 2) à proximité desquels ils sont disposés, par un calcul de moyenne rapporté à la position des différentes hauteurs de bord dans la région des barrages photo-électriques.

7. Dispositif de mesure selon une des revendications précédentes, **caractérisé en ce qu'**à l'aide des barrages photo-électriques (21, 21A ; 11, 11A, 11B), on détermine la (les) inclinaison(s) (β1, β2) des pales transporteuses (8) et/ou la (les) distance(s) de bord de produit transporté (K1, K2, KH) qui servent au calcul du volume de produit transporté (V) et, le cas échéant on les édite.

8. Dispositif de mesure selon une des revendications précédentes, **caractérisé en ce que** chaque fois deux des barrages photo-électriques (21, 21A ; 11A, 11B) parallèles sont disposés à proximité de la paroi latérale (4, 5 ; 1, 2) parallèle voisine.

9. Dispositif de mesure selon une des revendications précédentes, **caractérisé en ce que** le faisceau de rayons lumineux du (des) barrage(s) photo-électrique(s) (11, 11A, 11B ; 21, 21A) présente un diamètre qui est supérieur à la section du plus gros élément de produit à transporter

10. Dispositif de mesure selon une des revendications précédentes, **caractérisé en ce que** pour déterminer les instants de transition clair-sombre et sombre-clair, on compare la valeur de luminosité (HS) déterminée en continu d'un signal de barrage photo-électrique avec une valeur moyenne obtenue à partir d'une valeur de luminosité maximale (Smax) et d'une valeur de luminosité minimale (Smin) préalablement mémorisées et on utilise un dépassement vers le haut et vers le bas de la valeur moyenne (SW) pour déterminer l'instant de transition.

11. Dispositif de mesure selon une des revendications précédentes, **caractérisé en ce qu'**on contrôle la distance du bord de produit transporté (KH) en liaison avec la pente (β1, β2) et le cas échéant en liaison avec une inclinaison de pale transporteuse et la géométrie du puits pour établir si la pale transporteuse est entièrement recouverte de produit transporté (15) et si ce n'est le cas, on détermine le volume transporté en calculant des volumes de pyramides et de prismes correspondants ou en cas d'informations insuffisantes on procède à une évaluation par extrapolation.

12. Dispositif de mesure selon une des revendications précédentes, **caractérisé en ce que** pour minimiser l'erreur due à la tolérance sur l'angle de déversement, en fonction chaque fois d'un indice de type de céréale, on détermine des valeurs d'accélération et/ou d'humidité, on détermine suite à un changement d'inclinaison une grandeur de correction de conformation de surface, avec laquelle on corrige le volume de produit transporté (V) calculé de manière grossière.

13. Dispositif de mesure selon une des revendications précédentes, **caractérisé en ce que** pour diminuer l'erreur due à la tolérance sur l'angle de déversement, on soumet les pales transporteuses (8) à un secouage dans la zone voisine de l'entrée dans le(s) barrage(s) photo-électrique(s) (11, 21, 21A) et/ou les parois de puits (1, 2, 4, 5) sont conformées de manière à retenir le produit transporté (15).

14. Dispositif de mesure selon la revendication 1, **caractérisé en ce qu'**au moins dans une direction sont disposés une pluralité de barrages photo-électriques (11*) sur la base de la durée relative des signaux sombres desquels on détermine un profil de surface qui est pris en compte dans le calcul du volume.

15. Dispositif de mesure selon une des revendications précédentes, **caractérisé en ce que** les émetteurs de lumière et les récepteurs de lumière des barrages photo-électriques (11, 21, 21A, 11*) sont disposés chacun sur des parois de puits (1, 2 ; 4, 5) différentes ou sont disposés côte à côte en étant dirigés sur un réflecteur sur le côté opposé.
